# EUROPÄISCHE PATENTSCHRIFT

(11) **EP 3 819 623 B1**
(45) Veröffentlichungstag und Bekanntmachung des Hinweises auf die Patenterteilung: **23.08.2023**
(21) Anmeldenummer: 20201374.4
(22) Anmeldetag: 12.10.2020
(51) Int. Cl.: G01M 17/02

(54) **VERFAHREN ZUM KONFIGURIEREN EINES BILDAUFNAHMESYSTEMS EINER REIFENPRÜFEINRICHTUNG**
METHOD FOR CONFIGURING AN IMAGE ACQUISITION SYSTEM OF A TYRE TESTING DEVICE
MÉTHODE DE CONFIGURATION D'UN SYSTÈME D'ACQUISITION D'IMAGES D'UN DISPOSITIF D'ESSAI DE PNEUS

(30) Priorität: 07.11.2019 DE 102019217181
(43) Veröffentlichungstag der Anmeldung: 12.05.2021
(73) Patentinhaber: Continental Reifen Deutschland GmbH, 30165 Hannover (DE)
(72) Erfinder: Moreira, Eduardo João, 30419 Hannover (DE); Silva, Ana Eduarda, 30419 Hannover (DE)
(74) Vertreter: Continental Corporation

(56) Entgegenhaltungen:
- EP-A1- 1 473 539
- DE-A1-102013 225 891
- US-A1- 2015 226 644

## Beschreibung

Die Erfindung betrifft ein Verfahren zum Konfigurieren eines Bildaufnahmesystems einer Reifenprüfeinrichtung.

Ferner betrifft die Erfindung ein Bildaufnahmesystem für eine Reifenprüfeinrichtung, mit zumindest einer Bilderzeugungseinrichtung und einer Beleuchtungseinrichtung, welche eine oder mehrere Lichtquellen aufweist.

Darüber hinaus betrifft die Erfindung eine Reifenprüfeinrichtung mit einem Bildaufnahmesystem, welches zumindest eine Bilderzeugungseinrichtung und eine Beleuchtungseinrichtung umfasst.

Bei der maschinengestützten Reifenprüfung besteht regelmäßig das Problem, dass mittels einer Prüfmaschine Reifen unterschiedlicher Größe und/oder Form geprüft werden sollen. Die Konfiguration der Reifenprüfmaschine ist also vor dem Prüfvorgang an die Größe und/oder Form des zu prüfenden Reifens anzupassen.

Bei Reifenprüfmaschinen, welche die Reifenprüfung auf Grundlage von Bildaufnahmen einer Kamera durchführen, ist in diesem Zusammenhang eine geeignete Beleuchtung des zu prüfenden Reifens von besonderer Relevanz. Der Aufnahmebereich der Kamera der Reifenprüfmaschine ist mittels einer Beleuchtungseinrichtung der Reifenprüfmaschine in geeigneter Weise auszuleuchten. Abhängig von der Reifengröße und/oder der Reifenform ergeben sich an der Reifenoberfläche unterschiedliche Lichtreflektionen, sodass die Beleuchtungseinrichtung der Reifenprüfmaschine vor der eigentlichen Reifenprüfung entsprechend zu konfigurieren ist, damit die während der Reifenprüfung erzeugten Bildaufnahmen eine verlässliche Reifenprüfung erlauben.

Bei bekannten Reifenprüfmaschinen wird die Konfiguration des Bildaufnahmesystems manuell durch einen Maschinenbediener vorgenommen.

Die Ermittlung entsprechender Konfigurationseinstellungen für das Bildaufnahmesystem ist zeitaufwendig und nur von speziell ausgebildeten Technikern durchführbar.

Relevanter Stand der Technik ist aus EP 1 473 539 A1, US 2015/226644 A1 und DE 10 2013 225891 A1 bekannt.

Die der Erfindung zugrundeliegende Aufgabe besteht somit darin, die Konfiguration eines Bildaufnahmesystems einer Reifenprüfeinrichtung zu beschleunigen und den damit verbundenen Aufwand zu reduzieren.

Die Aufgabe wird gelöst durch ein Verfahren nach Anspruch 1.

Die Erfindung macht sich die Erkenntnis zunutze, dass mittels einer computergestützten Bildauswertung geeignete Konfigurationseinstellungen des Bildaufnahmesystems für einen zu prüfenden Reifen ermittelt werden können, wenn die unterschiedlichen Bildaufnahmen verschiedenen Konfigurationseinstellungen zugeordnet sind. Durch die Auswertung der bei den unterschiedlichen Konfigurationseinstellungen des Bildaufnahmesystems erzeugten Bildaufnahmen können beispielsweise Konfigurationseinstellungen identifiziert werden, welche zu einer Fehlbelichtung des zu prüfenden Reifens führen. Bei einer entsprechenden Fehlbelichtung weist der zu prüfende Reifen beispielsweise unter- oder überbelichtete Bereiche auf, sodass diese Konfigurationseinstellungen des Bildaufnahmesystems im Rahmen der Auswertung der Bildaufnahmen als ungeeignet klassifiziert werden können. Konfigurationseinstellungen, welche beispielsweise zu dunklen oder hellen Flecken in den Bildaufnahmen führen, können so als ungeeignet für den eigentlichen Prüfvorgang eingestuft werden. Ferner können weitere Parameter, wie beispielsweise das Bildrauschen, die Bildschärfe oder der Kontrast der einzelnen Aufnahmen ausgewertet werden, um geeignete Konfigurationseinstellungen des Bildaufnahmesystems für den zu prüfenden Reifen zu ermitteln. Die ermittelten geeigneten Konfigurationseinstellungen führen beispielsweise zu einem geeigneten Beleuchtungszustand im Aufnahmebereich einer Bilderzeugungseinrichtung des Bildaufnahmesystems, sodass eine zuverlässige automatisierte Reifenprüfung erfolgen kann.

Im Rahmen des erfindungsgemäßen Verfahrens erfolgt das Verändern der Konfigurationseinstellungen des Bildaufnahmesystems also zunächst zu Konfigurationszwecken und nicht zu Prüfungszwecken. Die Konfigurationseinstellungen werden innerhalb eines Konfigurationsbereichs variiert, bis die erzeugten Bildaufnahmen für die eigentliche Reifenprüfung verwertbar bzw. verwendbar sind. Die Datenverarbeitungseinrichtung, welche die Bildaufnahmen zum Ermitteln von geeigneten Konfigurationseinstellungen auswertet, kann beispielsweise Bestandteil der Reifenprüfeinrichtung, insbesondere des Bildaufnahmesystems der Reifenprüfeinrichtung, sein. Alternativ kann die Datenverarbeitungseinrichtung auch eine externe Datenverarbeitungseinrichtung sein. Die Datenverarbeitungseinrichtung kann Bestandteil eines Auswertecomputers sein. Der zu prüfende Reifen ist vorzugsweise ein Fahrzeugluftreifen.

In einer bevorzugten Ausführungsform des erfindungsgemäßen Verfahrens erfolgt ein Einstellen der ermittelten Konfigurationseinstellungen des Bildaufnahmesystems für den zu prüfenden Reifen durch eine Steuerungseinrichtung. Das Einstellen der ermittelten Konfigurationseinstellungen des Bildaufnahmesystems erfolgt zur Durchführung einer auf Bildaufnahmen des zu prüfenden Reifens basierenden Reifenprüfung. Nach dem Einstellen der ermittelten Konfigurationseinstellungen kann dann die eigentliche Reifenprüfung mit einer geeigneten Konfiguration und somit beispielsweise unter geeigneten Lichtbedingungen durchgeführt werden. Die Steuerungseinrichtung kann beispielsweise Bestandteil der Reifenprüfeinrichtung, insbesondere des Bildaufnahmesystems der Reifenprüfeinrichtung, sein.

In einer weiteren bevorzugten Ausführungsform des erfindungsgemäßen Verfahrens wird das mehrfache Verändern der Konfigurationseinstellungen des Bildaufnahmesystems und/oder das Erzeugen jeweils zumindest einer Bildaufnahme des zu prüfenden Reifens bei den unterschiedlichen Konfigurationseinstellungen des Bildaufnahmesystems selbsttätig durch die Reifenprüfeinrichtung im Rahmen einer Konfigurationsroutine für das Bildaufnahmesystem ausgeführt. Alternativ oder zusätzlich wird das Ermitteln der geeigneten Konfigurationseinstellungen des Bildaufnahmesystems für den zu prüfenden Reifen und/oder das Einstellen der ermittelten Konfigurationseinstellungen des Bildaufnahmesystems für den zu prüfenden Reifen selbsttätig durch die Reifenprüfeinrichtung im Rahmen einer Konfigurationsroutine für das Bildaufnahmesystem ausgeführt. Die erforderlichen manuellen Bedien- bzw. Betätigungsmaßnahmen werden somit reduziert oder sogar eliminiert. Die Reifenprüfung erfolgt somit unter einem hohen Automatisierungsgrad, sodass der Prüfungsaufwand und die Prüfungsdauer erheblich reduziert werden.

In einer anderen Ausführungsform des erfindungsgemäßen Verfahrens wird beim mehrfachen Verändern der Konfigurationseinstellungen des Bildaufnahmesystems die Position und/oder Ausrichtung zumindest einer Bilderzeugungseinrichtung des Bildaufnahmesystems, insbesondere mehrfach, verändert. Vorzugsweise umfasst das Ermitteln der geeigneten Konfigurationseinstellungen des Bildaufnahmesystems für den zu prüfenden Reifen das Ermitteln einer geeigneten Position und/oder Ausrichtung der zumindest einen Bilderzeugungseinrichtung des Bildaufnahmesystems für den zu prüfenden Reifen. Die Bilderzeugungseinrichtung ist vorzugsweise eine Kamera. Das Bildaufnahmesystem kann auch mehrere Kameras umfassen, für welche im Rahmen der Konfigurationsroutine ebenfalls geeignete Konfigurationseinstellungen ermittelt werden können. Das Einstellen der ermittelten Konfigurationseinstellungen des Bildaufnahmesystems für den zu prüfenden Reifen umfasst vorzugsweise das Einstellen der ermittelten Position und/oder Ausrichtung der zumindest einen Bilderzeugungseinrichtung des Bildaufnahmesystems.

In einer weiteren Ausführungsform des erfindungsgemäßen Verfahrens wird beim mehrfachen Verändern der Konfigurationseinstellungen des Bildaufnahmesystems die Position und/oder Ausrichtung einer oder mehrerer Lichtquellen einer Beleuchtungseinrichtung des Bildaufnahmesystems, insbesondere mehrfach, verändert. Das Ermitteln der geeigneten Konfigurationseinstellungen des Bildaufnahmesystems für den zu prüfenden Reifen umfasst in diesem Fall vorzugsweise das Ermitteln einer geeigneten Position und/oder Ausrichtung der einen oder der mehreren Lichtquellen der Beleuchtungseinrichtung des Bildaufnahmesystems für den zu prüfenden Reifen. Die eine oder die mehreren Lichtquellen der Beleuchtungseinrichtung sind vorzugsweise als LEDs, beispielsweise als Weißlicht-LEDs, ausgebildet. Das Einstellen der ermittelten Konfigurationseinstellungen des Bildaufnahmesystems für den zu prüfenden Reifen umfasst vorzugsweise das Einstellen der ermittelten Position und/oder Ausrichtung der einen oder der mehreren Lichtquellen der Beleuchtungseinrichtung des Bildaufnahmesystems.

Es ist ferner ein erfindungsgemäßes Verfahren vorteilhaft, bei welchem beim mehrfachen Verändern der Konfigurationseinstellungen des Bildaufnahmesystems der Aktivierungsstatus, die Helligkeit und/oder die Lichtfarbe einer oder mehrerer Lichtquellen einer Beleuchtungseinrichtung des Bildaufnahmesystems, insbesondere mehrfach, verändert wird. Das Ermitteln der geeigneten Konfigurationseinstellungen des Bildaufnahmesystems für den zu prüfenden Reifen umfasst vorzugsweise das Ermitteln eines geeigneten Aktivierungsstatus, einer geeigneten Helligkeit und/oder einer geeigneten Lichtfarbe der einen oder mehreren Lichtquellen der Beleuchtungseinrichtung des Bildaufnahmesystems für den zu prüfenden Reifen. Über den Aktivierungsstatus kann eingestellt werden, welche Lichtquellen der Beleuchtungseinrichtung während des eigentlichen Prüfvorgangs aktiviert und welche Lichtquellen der Beleuchtungseinrichtung während des eigentlichen Prüfvorgangs deaktiviert sein sollen. Ferner kann die Helligkeit, also die Leuchtintensität, der einen oder der mehreren Lichtquellen der Beleuchtungseinrichtung auf den zu prüfenden Reifen angepasst werden. Wenn die Lichtquellen eine veränderbare Lichtfarbe haben, kann außerdem die Lichtfarbe der einen oder der mehreren Lichtquellen an den zu prüfenden Reifen angepasst werden. Das Einstellen der ermittelten Konfigurationseinstellungen des Bildaufnahmesystems für den zu prüfenden Reifen umfasst vorzugsweise das Einstellen des ermittelten Aktivierungsstatus, der ermittelten Helligkeit und/oder der ermittelten Lichtfarbe an der einen oder den mehreren Lichtquellen der Beleuchtungseinrichtung des Bildaufnahmesystems.

Das erfindungsgemäße Verfahren wird ferner dadurch vorteilhaft weitergebildet, dass beim Ermitteln der geeigneten Konfigurationseinstellungen des Bildaufnahmesystems für den zu prüfenden Reifen ein geeigneter Parametersatz an Konfigurationsparametern zum Einstellen an dem Bildaufnahmesystem für die Durchführung einer auf Bildaufnahmen des zu prüfenden Reifens basierenden Reifenprüfung ermittelt wird. Der Parametersatz an Konfigurationsparametern kann beispielsweise eine Position und/oder Ausrichtung einer Bilderzeugungseinrichtung des Bildaufnahmesystems umfassen. Ferner kann der Parametersatz an Konfigurationsparametern die Position, die Ausrichtung, den Aktivierungsstatus, die Helligkeit und/oder die Lichtfarbe von einer oder mehreren Lichtquellen der Beleuchtungseinrichtung des Bildaufnahmesystems umfassen.

Gemäß des beanspruchten Verfahrens wird der zu prüfende Reifen identifiziert. Die Identifikation erfolgt über die Auswertung der Bildaufnahmen, wobei das Identifizieren des zu prüfenden Reifens über die Reifenbeschriftung erfolgen kann. Im Rahmen des erfindungsgemäßen Verfahrens erfolgt ein Zuordnen von ermittelten geeigneten Konfigurationseinstellungen für den identifizierten Reifen zu dem identifizierten Reifen. Die ermittelten geeigneten Konfigurationseinstellungen für den identifizierten Reifen werden dann gespeichert, beispielsweise auf einer Speichereinrichtung der Reifenprüfeinrichtung, insbesondere auf einer Speichereinrichtung des Beleuchtungssystems der Reifenprüfeinrichtung. Wenn ein typgleicher bzw. baugleicher Reifen zu einem späteren Zeitpunkt auf der Reifenprüfmaschine geprüft werden soll, ist dann die Ermittlung von geeigneten Konfigurationseinstellungen des Bildaufnahmesystems nicht mehr erforderlich. Die geeigneten Konfigurationseinstellungen des Bildaufnahmesystems können dann von dem Speicher geladen und entsprechend eingestellt werden. Die automatisierte Reifenprüfung wird somit nochmals beschleunigt.

Die der Erfindung zugrundeliegende Aufgabe wird ferner durch ein Bildaufnahmesystem nach Anspruch 7 gelöst.

Gemäß der beanspruchten Erfindung umfasst das Bildaufnahmesystem eine Datenverarbeitungseinrichtung, wobei das Bildaufnahmesystem dazu eingerichtet ist, das Verfahren zum Konfigurieren eines Bildaufnahmesystems nach einer der vorstehend beschriebenen Ausführungsformen auszuführen. Hinsichtlich der Vorteile und Modifikationen eines derartigen Bildaufnahmesystems wird auf die Vorteile und Modifikationen des erfindungsgemäßen Verfahrens zum Konfigurieren eines Bildaufnahmesystems verwiesen.

Die der Erfindung zugrundeliegende Aufgabe wird ferner durch eine Reifenprüfeinrichtung nach Anspruch 8 gelöst.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel des erfindungsgemäßen Bildaufnahmesystems in einer schematischen Darstellung,
- Fig. 2: eine Beleuchtungseinrichtung eines Bildaufnahmesystems in Kombination mit zwei unterschiedlichen Reifen,

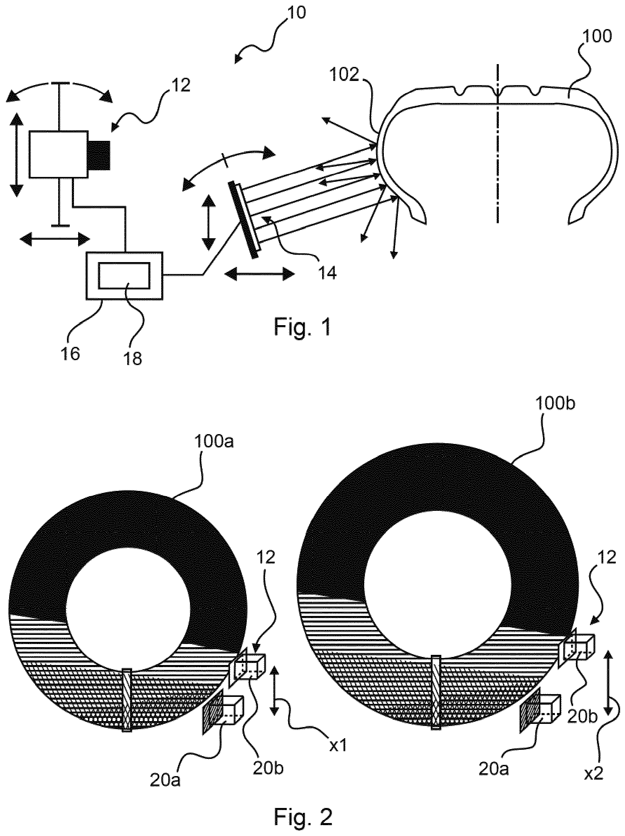

Die Fig. 1 zeigt ein Bildaufnahmesystem 10 einer Reifenprüfeinrichtung, wobei mittels der Reifenprüfeinrichtung die Reifenoberfläche 102 des Reifens 100 auf Defekte, Beschädigungen und Fehler überprüft werden kann.

Das Bildaufnahmesystem 10 weist eine als Kamera ausgebildete Bilderzeugungseinrichtung 12 auf, mittels welcher Bildaufnahmen von der Reifenoberfläche 102 erzeugt werden können. Die Bilderzeugungseinrichtung 12 ist derart angeordnet, dass diese auf eine Flanke bzw. Seitenwand des Reifens 100 ausgerichtet ist. Das Bildaufnahmesystem 10 kann weitere Bilderzeugungseinrichtungen 12 aufweisen, mittels welchen Bildaufnahmen von anderen außen- und/oder innenliegenden Oberflächenabschnitten des Reifens 100 erzeugbar sind.

Darüber hinaus umfasst das dargestellte Bildaufnahmesystem 10 eine Beleuchtungseinrichtung 14, welche eine oder mehrere Lichtquellen aufweisen kann. Mittels der Beleuchtungseinrichtung 14 kann der Aufnahmebereich der Bilderzeugungseinrichtung 12 ausgeleuchtet werden.

Die Bilderzeugungseinrichtung 12 und die Beleuchtungseinrichtung 14 sind signalleitend mit einer Steuerungseinrichtung 16 verbunden, welche dazu eingerichtet ist, die Bilderzeugungseinrichtung 12 und die Beleuchtungseinrichtung 14 zu steuern. Die Steuerungseinrichtung 16 umfasst eine Datenverarbeitungseinrichtung 18.

Bevor die Prüfung der Reifenoberfläche 102 auf etwaige Fehler, Defekte oder Beschädigungen erfolgt, sind zunächst geeignete Konfigurationseinstellungen für die Bilderzeugungseinrichtung 12 zu ermitteln. Das Bildaufnahmesystem 10 ist nämlich vor dem Durchführen der eigentlichen Reifenprüfung derart zu konfigurieren, dass im Aufnahmebereich der Bilderzeugungseinrichtung 12 ein geeigneter Beleuchtungszustand vorliegt. Ferner sind die Bilderzeugungseinrichtung 12 und die Beleuchtungseinrichtung 14 vor der eigentlichen Reifenprüfung in geeigneter Weise zu positionieren und auszurichten.

Die Fig. 1 zeigt die Lichtreflektion an der Reifenoberfläche 102. Das Bildaufnahmesystem 10 ist Bestandteil einer Reifenprüfeinrichtung, mittels welcher unterschiedliche Reifen überprüft werden können. Somit ist das Bildaufnahmesystem 10 vor jeder Prüfung an die Reifengröße, die Reifengeometrie und den Reifentyp anzupassen.

Die Bilderzeugungseinrichtung 12 ist mit einer Positioniereinrichtung verbunden, über welche die Position und Ausrichtung der Bilderzeugungseinrichtung 12 veränderbar ist. Die Positioniereinrichtung weist einen steuerbaren Antrieb auf, sodass keine manuelle Positions- und Neigungseinstellung erforderlich ist.

Mittels der Positioniereinrichtung ist beispielsweise die Höhe der Bilderzeugungseinrichtung 12 einstellbar. Ferner ist über die Positioniereinrichtung der Abstand der Bilderzeugungseinrichtung 12 zu dem Reifen 100 einstellbar. Darüber hinaus kann mittels der Positioniereinrichtung die Neigung der Bilderzeugungseinrichtung 12 eingestellt werden.

Die Beleuchtungseinrichtung 12 ist ebenfalls mit einer Positioniereinrichtung verbunden, welche mit einem steuerbaren Antrieb ausgestattet ist. Über die Positioniereinrichtung kann ebenfalls die Höhe und Neigung der Beleuchtungseinrichtung 14 sowie der Abstand der Beleuchtungseinrichtung 14 zu dem Reifen 100 eingestellt werden. Darüber hinaus erlaubt die Steuerungseinrichtung 16 die Einstellung der Leuchtintensität, also der Leuchtstärke, der Lichtquellen der Beleuchtungseinrichtung 14. Darüber hinaus lassen sich einzelne Lichtquellen der Beleuchtungseinrichtung 14 über die Steuerungseinrichtung 16 aktivieren und deaktivieren.

Das Bildaufnahmesystem 10 ist dazu eingerichtet, selbsttätig eine Konfigurationsroutine zum Ermitteln von geeigneten Konfigurationseinstellungen für die Bilderzeugungseinrichtung 12 und die Beleuchtungseinrichtung 14 durchzuführen. Beim Konfigurieren des Bildaufnahmesystems 10 werden die Konfigurationseinstellungen des Bildaufnahmesystems 10 mehrfach verändert. Beim mehrfachen Verändern der Konfigurationseinstellungen des Bildaufnahmesystems 10 wird die Position und die Ausrichtung der Bilderzeugungseinrichtung 12 mehrfach verändert. Ferner wird beim mehrfachen Verändern der Konfigurationseinstellungen des Bildaufnahmesystems 10 die Position, die Ausrichtung, der Aktivierungsstatus und die Helligkeit einer oder mehrerer Lichtquellen der Beleuchtungseinrichtung 14 mehrfach verändert.

Im Rahmen der Konfigurationsroutine wird bei den unterschiedlichen Konfigurationseinstellungen des Bildaufnahmesystems 10 jeweils eine Bildaufnahme durch die Bilderzeugungseinrichtung 12 erzeugt. Zu jeder eingestellten Konfigurationseinstellung des Bildaufnahmesystems 10 liegt somit eine Bildaufnahme vor.

Die Datenverarbeitungseinrichtung 18 ermittelt dann auf Grundlage der erzeugten Bildaufnahmen des zu prüfenden Reifens 100 bei den unterschiedlichen Konfigurationseinstellungen des Bildaufnahmesystems 10 geeignete Konfigurationseinstellungen des Bildaufnahmesystems 10 für den zu prüfenden Reifen 100. Das Ermitteln der geeigneten Konfigurationseinstellungen des Bildaufnahmesystems 10 für den zu prüfenden Reifen 100 umfasst das Ermitteln einer geeigneten Position und Ausrichtung der Bilderzeugungseinrichtung des Bildaufnahmesystems 10 für den zu prüfenden Reifen 100. Darüber hinaus umfasst das Ermitteln der geeigneten Konfigurationseinstellung des Bildaufnahmesystems 10 für den zu prüfenden Reifen 100 das Ermitteln einer geeigneten Position, einer geeigneten Ausrichtung eines geeigneten Aktivierungsstatus und einer geeigneten Helligkeit der Lichtquellen der Beleuchtungseinrichtung 14 des Bildaufnahmesystems 10 für den zu prüfenden Reifen 100. Folglich wird beim Ermitteln der geeigneten Konfigurationseinstellungen des Bildaufnahmesystems 10 für den zu prüfenden Reifen 100 ein geeigneter Parametersatz an Konfigurationsparametern zum Einstellen an dem Bildaufnahmesystem 10 für die Durchführung einer auf Bildaufnahmen des zu prüfenden Reifens 100 basierenden Reifenprüfung ermittelt.

Die ermittelten Konfigurationseinstellungen des Bildaufnahmesystems 10 für den zu prüfenden Reifen 100 werden anschließend durch die Steuerungseinrichtung 16 zur Durchführung der auf Bildaufnahmen des zu prüfenden Reifens 100 basierenden Reifenprüfung eingestellt.

Das mehrfache Verändern der Konfigurationseinstellungen des Bildaufnahmesystems 10, das Erzeugen der Bildaufnahmen des zu prüfenden Reifens 100 bei den unterschiedlichen Konfigurationseinstellungen des Bildaufnahmesystems 10, das Ermitteln der geeigneten Konfigurationseinstellungen des Bildaufnahmesystems 10 für den zu prüfenden Reifen 100 und das Einstellen der ermittelten Konfigurationseinstellungen des Bildaufnahmesystems 10 für den zu prüfenden Reifen 100 erfolgt selbsttätig durch die Reifenprüfeinrichtung im Rahmen einer Konfigurationsroutine für das Bildaufnahmesystem 10.

Während der Konfigurationsroutine wird außerdem der zu prüfende Reifen 100 auf Grundlage der erzeugten Bildaufnahmen durch die Datenverarbeitungseinrichtung 18 identifiziert.

Nach der Identifikation des zu prüfenden Reifens 100 werden dann die ermittelten geeigneten Konfigurationseinstellungen für den identifizierten Reifen 100 dem identifizierten Reifen 100 zugeordnet. Nach erfolgter Zuordnung werden dann die ermittelten geeigneten Konfigurationseinstellungen für den identifizierten Reifen 100 gespeichert, beispielsweise auf einem Datenspeicher des Bildaufnahmesystems 10 oder der Reifenprüfeinrichtung. Wenn der gleiche Reifen im Rahmen einer späteren Konfigurationsroutine identifiziert wird, können die auf dem Datenspeicher gespeicherten Konfigurationseinstellungen abgerufen und für die nachfolgende eigentliche Reifenprüfung verwendet werden.

Die Fig. 2 zeigt zwei Reifen 100a, 100b unterschiedlicher Größe. Die Beleuchtungseinrichtung 12 des verwendeten Bildaufnahmesystems 10 weist zwei Beleuchtungsmodule 20a, 20b auf. Die Beleuchtungsmodule 20a, 20b weisen eine oder mehrere Lichtquellen auf, mittels welcher die Oberfläche der Reifen 100a, 100b ausgeleuchtet werden können, um einen geeigneten Beleuchtungszustand für die Erzeugung von Bildaufnahmen zu schaffen.

Die Fig. 2 zeigt, dass aufgrund der unterschiedlichen Größen der Reifen 100a, 100b die Beleuchtungsmodule 20a, 20b an unterschiedlichen Positionen anzuordnen sind, damit eine geeignete Oberflächenausleuchtung realisiert wird.

Bei dem auf der linken Seite dargestellten kleineren Reifen weisen die Beleuchtungsmodule 20a, 20b einen Abstand x1 voneinander auf. Bei dem auf der rechten Seite dargestellten Reifen 100b weisen die Beleuchtungsmodule 20a, 20b einen Abstand x2 voneinander auf. Die Abstände x1, x2 unterscheiden sich voneinander.

Neben der Positionierung der Beleuchtungsmodule 20a, 20b der Beleuchtungseinrichtung 14 kann es außerdem erforderlich sein, die Helligkeit der Lichtquellen der Beleuchtungsmodule 20a, 20b unterschiedlich einzustellen, um einen geeigneten Beleuchtungszustand zur Durchführung der eigentlichen Reifenprüfung zu schaffen.

### Bezugszeichenliste

- 10: Bildaufnahmesystem
- 12: Bilderzeugungseinrichtung
- 14: Beleuchtungseinrichtung
- 16: Steuerungseinrichtung
- 18: Datenverarbeitungseinrichtung
- 20, 20a, 20b: Beleuchtungsmodule

- 100, 100a, 100b: Reifen
- 102: Reifenoberfläche

- x1, x2: Abstände

## Patentansprüche

1. Verfahren zum Konfigurieren eines Bildaufnahmesystems (10) einer Reifenprüfeinrichtung, mit den Schritten:
- mehrfaches Verändern der Konfigurationseinstellungen des Bildaufnahmesystems (10),
- Erzeugen jeweils zumindest einer Bildaufnahme eines zu prüfenden Reifens (100, 100a, 100b) bei den unterschiedlichen Konfigurationseinstellungen des Bildaufnahmesystems (10),
- Ermitteln von geeigneten Konfigurationseinstellungen des Bildaufnahmesystems (10) für den zu prüfenden Reifen (100, 100a, 100b) auf Grundlage der erzeugten Bildaufnahmen des zu prüfenden Reifens (100, 100a, 100b) bei den unterschiedlichen Konfigurationseinstellungen des Bildaufnahmesystems (10) durch eine Datenverarbeitungseinrichtung (18), **gekennzeichnet durch**
- Identifizieren des zu prüfenden Reifens (100, 100a, 100b) über die Auswertung der Bildaufnahmen,
- Zuordnen von ermittelten geeigneten Konfigurationseinstellungen für den identifizierten Reifen (100, 100a, 100b) zu dem identifizierten Reifen (100, 100a, 100b) und
- Speichern der ermittelten geeigneten Konfigurationseinstellungen für den identifizierten Reifen (100, 100a, 100b).

2. Verfahren nach Anspruch 1,
**gekennzeichnet durch** den Schritt:
- Einstellen der ermittelten Konfigurationseinstellungen des Bildaufnahmesystems (10) für den zu prüfenden Reifen (100, 100a, 100b) durch eine Steuerungseinrichtung (16) zur Durchführung einer auf Bildaufnahmen des zu prüfenden Reifens (100, 100a, 100b) basierenden Reifenprüfung.

3. Verfahren nach Anspruch 1 oder 2,
**dadurch gekennzeichnet, dass**
- das mehrfache Verändern der Konfigurationseinstellungen des Bildaufnahmesystems (10),
- das Erzeugen jeweils zumindest einer Bildaufnahme des zu prüfenden Reifens (100, 100a, 100b) bei den unterschiedlichen Konfigurationseinstellungen des Bildaufnahmesystems (10),
- das Ermitteln der geeigneten Konfigurationseinstellungen des Bildaufnahmesystems (10) für den zu prüfenden Reifen (100, 100a, 100b), und/oder
- das Einstellen der ermittelten Konfigurationseinstellungen des Bildaufnahmesystems (10) für den zu prüfenden Reifen (100, 100a, 100b)
selbsttätig durch die Reifenprüfeinrichtung in Rahmen einer Konfigurationsroutine für das Bildaufnahmesystem (10) ausgeführt wird.

4. Verfahren nach einem der vorstehenden Ansprüche,
**dadurch gekennzeichnet, dass** beim mehrfachen Verändern der Konfigurationseinstellungen des Bildaufnahmesystems (10)
- die Position und/oder Ausrichtung zumindest einer Bilderzeugungseinrichtung (12) des Bildaufnahmesystems (10), und/oder
- die Position und/oder Ausrichtung einer oder mehrerer Lichtquellen einer Beleuchtungseinrichtung (14) des Bildaufnahmesystems (10), insbesondere mehrfach, verändert wird,
wobei das Ermitteln der geeigneten Konfigurationseinstellungen des Bildaufnahmesystems (10) für den zu prüfenden Reifen (100, 100a, 100b) vorzugsweise
- das Ermitteln einer geeigneten Position und/oder Ausrichtung der zumindest einen Bilderzeugungseinrichtung (12) des Bildaufnahmesystems (10) für den zu prüfenden Reifen (100, 100a, 100b), und/oder
- das Ermitteln einer geeigneten Position und/oder Ausrichtung der einen oder der mehreren Lichtquellen der Beleuchtungseinrichtung (14) des Bildaufnahmesystems (10) für den zu prüfenden Reifen (100, 100a, 100b),
umfasst.

5. Verfahren nach einem der vorstehenden Ansprüche,
**dadurch gekennzeichnet, dass** beim mehrfachen Verändern der Konfigurationseinstellungen des Bildaufnahmesystems (10) der Aktivierungsstatus, die Helligkeit und/oder die Lichtfarbe einer oder mehrerer Lichtquellen einer Beleuchtungseinrichtung (14) des Bildaufnahmesystems (10), insbesondere mehrfach, verändert wird, wobei das Ermitteln der geeigneten Konfigurationseinstellungen des Bildaufnahmesystems (10) für den zu prüfenden Reifen (100, 100a, 100b) vorzugsweise das Ermitteln eines geeigneten Aktivierungsstatus, einer geeigneten Helligkeit und/oder einer geeigneten Lichtfarbe der einen oder der mehreren Lichtquellen der Beleuchtungseinrichtung (14) des Bildaufnahmesystems (10) für den zu prüfenden Reifen (100, 100a, 100b) umfasst.

6. Verfahren nach einem der vorstehenden Ansprüche,
**dadurch gekennzeichnet, dass** beim Ermitteln der geeigneten Konfigurationseinstellungen des Bildaufnahmesystems (10) für den zu prüfenden Reifen (100, 100a, 100b) ein geeigneter Parametersatz an Konfigurationsparametern zum Einstellen an dem Bildaufnahmesystem (10) für die Durchführung einer auf Bildaufnahmen des zu prüfenden Reifens (100, 100a, 100b) basierenden Reifenprüfung ermittelt wird.

7. Bildaufnahmesystem (10) für eine Reifenprüfeinrichtung, mit
- zumindest einer Bilderzeugungseinrichtung (12),
- einer Beleuchtungseinrichtung (14), welche eine oder mehrere Lichtquellen aufweist und
- eine Datenverarbeitungseinrichtung (18),
**dadurch gekennzeichnet, dass** das Bildaufnahmesystem (10) dazu eingerichtet ist, das Verfahren zum Konfigurieren eines Bildaufnahmesystems (10) nach einem der Ansprüche 1 bis 6 und selbsttätig eine Konfigurationsroutine zum Ermitteln von geeigneten Konfigurationseinstellungen für die zumindest eine Bilderzeugungseinrichtung (12) und die Beleuchtungseinrichtung (14) des Bildaufnahmesystems (10) durchzuführen.

8. Reifenprüfeinrichtung, mit
- einem Bildaufnahmesystem (10), welches zumindest eine Bilderzeugungseinrichtung (12) und eine Beleuchtungseinrichtung (14) umfasst,
**dadurch gekennzeichnet, dass** das Bildaufnahmesystem (10) nach Anspruch 7 ausgebildet ist und/oder die Reifenprüfeinrichtung dazu eingerichtet ist, das Verfahren zum Konfigurieren eines Bildaufnahmesystems (10) nach einem der Ansprüche 1 bis 6 durchzuführen.

## Claims

1. Method for configuring an image recording system (10) of a tyre testing apparatus, including the steps of:
- modifying the configuration settings of the image recording system (10) multiple times,
- producing at least one image recording of a tyre (100, 100a, 100b) to be tested for each of the different configuration settings of the image recording system (10),
- using a data processing apparatus (18) to determine, on the basis of the image recordings produced for the tyre (100, 100a, 100b) to be tested in the different configuration settings of the image recording system (10), suitable configuration settings of the image recording system (10) for the tyre (100, 100a, 100b) to be tested, **characterized by**
- the use of the evaluation of the image recordings to identify the tyre (100, 100a, 100b) to be tested,
- the assignment of determined suitable configuration settings for the identified tyre (100, 100a, 100b) to the identified tyre (100, 100a, 100b) and
- the storage of the determined suitable configuration settings for the identified tyre (100, 100a, 100b).

2. Method according to Claim 1,
**characterized by** the step of:
- using a control apparatus (16) to set the determined configuration settings of the image recording system (10) for the tyre (100, 100a, 100b) to be tested, for the purpose of carrying out a tyre test on the basis of image recordings of the tyre (100, 100a, 100b) to be tested.

3. Method according to Claim 1 or 2,
**characterized in that**
- the multiple modifications of the configuration settings of the image recording system (10),
- the production of at least one image recording of the tyre (100, 100a, 100b) to be tested for each of the different configuration settings of the image recording system (10),
- the determination of the suitable configuration settings of the image recording system (10) for the tyre (100, 100a, 100b) to be tested, and/or
- the setting of the determined configuration settings of the image recording system (10) for the tyre (100, 100a, 100b) to be tested
are/is carried out automatically by the tyre testing apparatus within the scope of a configuration routine for the image recording system (10).

4. Method according to any of the preceding claims,
**characterized in that** the multiple modifications of the configuration settings of the image recording system (10) include modification, in particular multiple modifications, of
- the position and/or alignment of at least one image production apparatus (12) of the image recording system (10), and/or
- the position and/or alignment of one or more light sources of a lighting apparatus (14) of the image recording system (10),
wherein the determination of the suitable configuration settings of the image recording system (10) for the tyre (100, 100a, 100b) to be tested preferably comprises
- the determination of a suitable position and/or alignment of the at least one image production apparatus (12) of the image recording system (10) for the tyre (100, 100a, 100b) to be tested, and/or
- the determination of a suitable position and/or alignment of the one or more light sources of the lighting apparatus (14) of the image recording system (10) for the tyre (100, 100a, 100b) to be tested.

5. Method according to any of the preceding claims,
**characterized in that** the multiple modifications of the configuration settings of the image recording system (10) include the modification, in particular multiple modifications, of the activation status, the brightness and/or the light colour of one or more light sources of a lighting apparatus (14) of the image recording system (10), wherein the determination of the suitable configuration settings of the image recording system (10) for the tyre (100, 100a, 100b) to be tested preferably comprises the determination of a suitable activation status, a suitable brightness and/or a suitable light colour of the one or more light sources of the lighting apparatus (14) of the image recording system (10) for the tyre (100, 100a, 100b) to be tested.

6. Method according to any of the preceding claims,
**characterized in that** the determination of the suitable configuration settings of the image recording system (10) for the tyre (100, 100a, 100b) to be tested includes the determination of a suitable parameter set of configuration parameters to be set on the image recording system (10) for the purpose of carrying out a tyre test which is based on image recordings of the tyre (100, 100a, 100b) to be tested.

7. Image recording system (10) for a tyre testing apparatus, having
- at least one image production apparatus (12),
- a lighting apparatus (14) which comprises one or more light sources, and
- a data processing apparatus (18),
**characterized in that** the image recording system (10) is configured to carry out the method for configuring an image recording system (10) according to any of Claims 1 to 6 and to carry out automatically a configuration routine for determining suitable configuration settings for the at least one image production apparatus (12) and the lighting apparatus (14) of the image recording system (10).

8. Tyre testing apparatus, having
- an image recording system (10) which comprises at least one image production apparatus (12) and one lighting apparatus (14),
**characterized in that** the image recording system (10) is designed according to Claim 7 and/or the tyre testing apparatus is configured to carry out the method for configuring an image recording system (10) according to any of Claims 1 to 6.

## Revendications

1. Procédé permettant de configurer un système de prise de vue (10) d'un dispositif d'essai de pneu, comprenant les étapes consistant à :
- modifier plusieurs fois les réglages de configuration du système de prise de vue (10),
- générer respectivement au moins une prise de vue d'un pneu à essayer (100, 100a, 100b) avec les différents réglages de configuration du système de prise de vue (10),
- déterminer des réglages de configuration adaptés du système de prise de vue (10) pour le pneu à essayer (100, 100a, 100b) sur la base des prises de vue générées du pneu à essayer (100, 100a, 100b) avec les différents réglages de configuration du système de prise de vue (10) par un dispositif de traitement de données (18),
**caractérisé par** les étapes consistant à
- identifier le pneu à essayer (100, 100a, 100b) par l'évaluation des prises de vue,
- associer au pneu identifié (100, 100a, 100b) des réglages de configuration adaptés déterminés pour le pneu identifié (100, 100a, 100b), et
- mémoriser les réglages de configuration adaptés déterminés pour le pneu identifié (100, 100a, 100b).

2. Procédé selon la revendication 1, **caractérisé par** l'étape consistant à:
- régler les réglages de configuration déterminés du système de prise de vue (10) pour le pneu à essayer (100, 100a, 100b) par un dispositif de commande (16) afin d'effectuer un essai de pneu basé sur les prises de vue du pneu à essayer (100, 100a, 100b).

3. Procédé selon la revendication 1 ou 2, **caractérisé en ce que**
- la modification multiple des réglages de configuration du système de prise de vue (10),
- la génération respectivement d'au moins une prise de vue du pneu à essayer (100, 100a, 100b) avec les différents réglages de configuration du système de prise de vue (10),
- la détermination des réglages de configuration adaptés du système de prise de vue (10) pour le pneu à essayer (100, 100a, 100b), et/ou
- le réglage des réglages de configuration déterminés du système de prise de vue (10) pour le pneu à essayer (100, 100a, 100b)
sont effectués de façon autonome par le dispositif d'essai de pneu dans le cadre d'une routine de configuration pour le système de prise de vue (10).

4. Procédé selon l'une quelconque des revendications précédentes, **caractérisé en ce que** lors des multiples modifications des réglages de configuration du système de prise de vue (10)
- la position et/ou l'orientation d'au moins un dispositif de formation d'image (12) du système de prise de vue (10), et/ou
- la position et/ou l'orientation d'une ou de plusieurs sources de lumière d'un dispositif d'éclairage (14) du système de prise de vue (10),
sont modifiées, en particulier plusieurs fois,
dans lequel la détermination des réglages de configuration adaptés du système de prise de vue (10) pour le pneu à essayer (100, 100a, 100b) comprend de préférence
- la détermination d'une position et/ou d'une orientation adaptée(s) du au moins un dispositif de formation d'image (12) du système de prise de vue (10) pour le pneu à essayer (100, 100a, 100b), et/ou
- la détermination d'une position et/ou d'une orientation de ladite une ou des plusieurs sources de lumière du dispositif d'éclairage (14) du système de prise de vue (10) pour le pneu à essayer (100, 100a, 100b).

5. Procédé selon l'une quelconque des revendications précédentes, **caractérisé en ce que** lors de la modification multiple des réglages de configuration du système de prise de vue (10), le statut d'activation, la luminosité et/ou la couleur de la lumière d'une ou de plusieurs sources de lumière d'un dispositif d'éclairage (14) du système de prise de vue (10) sont modifiés, en particulier plusieurs fois, dans lequel la détermination des réglages de configuration adaptés du système de prise de vue (10) pour le pneu à essayer (100, 100a, 100b) comprend de préférence la détermination d'un statut d'activation adapté, d'une luminosité adaptée et/ou d'une couleur de lumière adaptée de ladite une ou des plusieurs sources de lumière du dispositif d'éclairage (14) du système de prise de vue (10) pour le pneu à essayer (100, 100a, 100b).

6. Procédé selon l'une quelconque des revendications précédentes, **caractérisé en ce que** lors de la détermination des réglages de configuration adaptés du système de prise de vue (10) pour le pneu à essayer (100, 100a, 100b) un jeu de paramètres adaptés composé de paramètres de configuration pour un réglage au niveau du système de prise de vue (10) pour une exécution d'un essai de pneu basé sur des prises de vue du pneu à essayer (100, 100a, 100b) est déterminé.

7. Système de prise de vue (10) pour un dispositif d'essai de pneu, comprenant
- au moins un dispositif de formation d'image (12),
- un dispositif d'éclairage (14) qui présente une ou plusieurs sources de lumière, et
- un dispositif de traitement de données (18),
**caractérisé en ce que** le système de prise de vue (10) est conçu pour exécuter le procédé permettant de configurer un système de prise de vue (10) selon l'une quelconque des revendications 1 à 6 et pour effectuer de façon autonome une routine de configuration pour déterminer des réglages de configuration adaptés pour ledit au moins un dispositif de formation d'image (12) et le dispositif d'éclairage (14) du système de prise de vue (10).

8. Dispositif d'essai de pneu, comprenant
- un système de prise de vue (10) qui comprend au moins un dispositif de formation d'image (12) et un dispositif d'éclairage (14),
**caractérisé en ce que** le système de prise de vue (10) est réalisé selon la revendication 7, et/ou le dispositif d'essai de pneu est conçu pour exécuter le procédé permettant de configurer un système de prise de vue (10) selon l'une quelconque des revendications 1 à 6.
